# EUROPEAN PATENT APPLICATION

(11) **EP 1 598 160 A1**
(43) Date of publication of application: **23.11.2005**
(21) Application number: 05010621.0
(22) Date of filing: 17.05.2005
(51) Int. Cl.: B27B 5/18, B27B 5/075, B23D 47/02

(54) **A panel saw machine**

(30) Priority: 18.05.2004 IT BO20040314
(71) Applicant: GIBEN INTERNATIONAL S.p.A., 40065 Pianoro (Bologna) (IT)
(72) Inventor: Benuzzi Piergiorgio, 40121 Bologna (IT)
(74) Representative: Lanzoni, Luciano

(57) **Abstract**

A panel saw machine (1) has a base (3), two blade carriages (9,10) connected one behind the other and mobile relative to the base (3) for cutting panels (2), a supporting and guiding device (8) for the carriages (9,10) fixed to the base (3), a drive part (11) attached to the carriages (9,10) to move them in a predetermined direction (B) along the supporting and guiding device (8), and vibrating devices (33,50) attached to the carriages (9,10) to transmit to each carriage (9,10) and/or to each blade (16,37) a vibrating motion at least during the respective movement in the above-mentioned direction (B).

## Description

The present invention relates to a panel saw machine.

In particular, the present invention relates to a panel saw machine able to cut panels, or packs of panels stacked on top of one another, made mainly of wood or a similar material.

Panel saw machines usually comprise a horizontal table or surface which supports the panels, a first carriage (normally indicated as the gripper beam) for moving the panels gripped in this way along the table in a first longitudinal direction parallel with the table, and at least a second carriage, usually called the blade carriage, for moving a cutting tool in a second direction parallel with the table, transversal and therefore perpendicular to the above-mentioned first direction.

The cutting tool usually consists of a circular saw, the outside of which is delimited by a blade and which rotates about an axis parallel with the first direction. This is attached to an end trimming tool, lying in the same plane as the blade and which is designed to prepare the cut, to prevent splintering on the surface of the panel to be cut.

The panel feed carriage and the blade carriage are mobile along respective supporting and sliding guides which are perpendicular to one another.

In particular, the blade carriage comprises wheels (this term referring to generic rolling connecting means) which roll on respective rails parallel with the second direction.

The rails needed to support and guide the blade carriage are normally formed by two rigid bars positioned along the sides of the carriage and fixed to the base of the panel saw machine. The wheels are held in close contact on these bars so as to isostatically support the blade carriage and to leave it the possibility of moving only in the above-mentioned second direction.

The movement of the blade carriage along the second direction is preferably guaranteed by a motor-powered pinion, which is supported by the blade carriage and engages with a rack fixed to the base of the panel saw machine and vice versa.

Panel saw machines of the known type described above are subject to wear on the cutting blade which increases proportionally to the difficulty and rapidity of blade feed in the above-mentioned second direction. Often, said feed difficulty causes high speed blade sliding on the panels and consequent harmful blade overheating. However, this phenomenon is manifested in a manner directly proportional to the degree of wear on the blade, that is to say, it occurs more frequently the more worn the blade is, therefore resulting in a rapid reduction in the sharpness of the blade.

Basically, until now no solutions have been found which can guarantee the best performance from cutting blades, making them longer lasting and, above all, giving a direct indication of the state of wear. Experience shows that it is better to change (or sharpen) the blade well before it has reached the critical cutting point, otherwise there is a sudden deterioration which may result in negative blade deterioration.

The aim of the present invention is to provide a panel saw machine which is free of the disadvantage described above.

The technical features of the present invention, in accordance with the preset aim, are clearly described in the claims herein, in particular claim 1 and any of the claims directly or indirectly dependent on claim 1.

The advantages of the present invention are also more apparent in the detailed description which follows, of a preferred, non-limiting embodiment in accordance with the accompanying drawings. In the accompanying drawings:
- Figure 1 is a view, according to line II - II illustrated in Figure 2, of a panel saw machine made in accordance with the present invention;
- Figure 2 is a front view, with some parts in cross section and some parts cut away for greater clarity, of the panel saw machine illustrated in Figure 1;
- Figure 3 is a schematic front view of an alternative embodiment of the panel saw machine illustrated in Figures 1 and 2;
- Figure 4 is an enlarged detail of the panel saw machine relative to the cutting blades, according to the same view illustrated in Figure 1;
- Figure 5 illustrates a detail of the tool - panel pack assembly according to the machine made in accordance with the present invention;
- Figure 6 is an enlarged detail from Figure 1, for an improved understanding of it;
- Figure 7 is a plan view of a panel saw machine layout using the solution in accordance with the present invention.

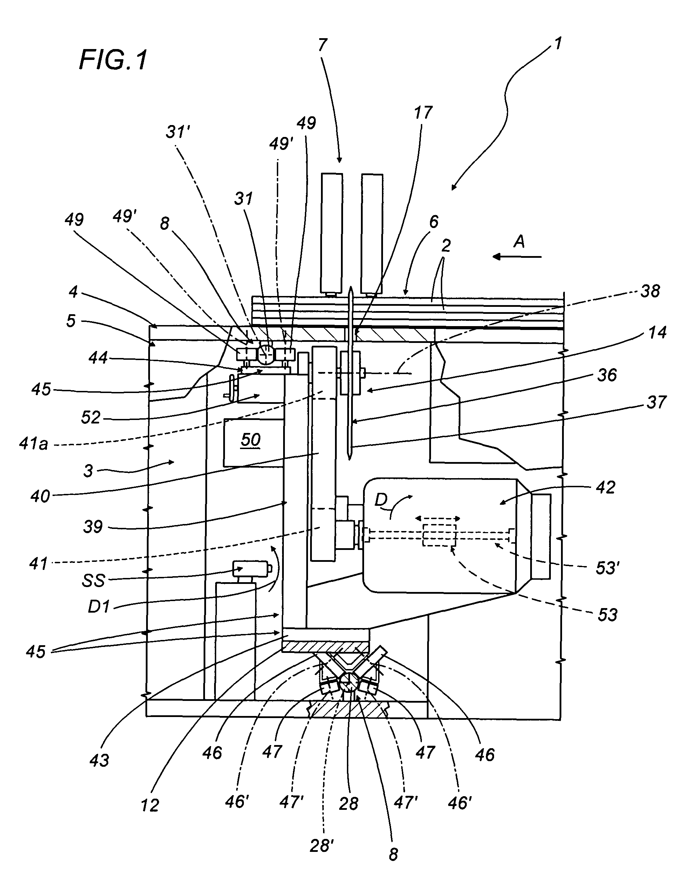

With reference to Figure 1, the numeral 1 denotes as a whole a machine for sawing panels 2 made of wood, its products, plastic materials in general and nonferrous materials.

The machine 1 comprises a base 3 and a table 4, which extends horizontally cantilever style from an upper end 5 of the base 3 and acts as a surface on which the panels 2 to be cut are supported and slide.

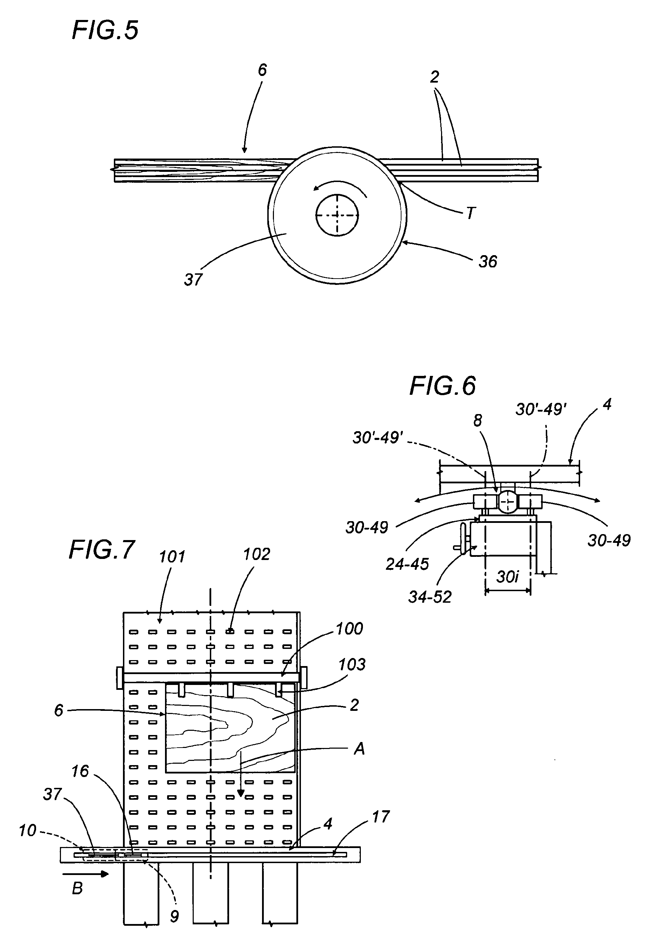

The panels 2, placed on top of one another (if there are two or more to form a pack), are fed in blocks 6, in a direction A parallel with the table 4, by a pusher carriage or beam 100 (see Figure 7), and are held in contact with the table 4, during the cutting step, by a presser device 7, usually with two elements, also of the known type and only schematically illustrated in Figure 1.

Basically, a generic panel saw machine with a single cutting line - as schematically illustrated in Figure 7 - consists of: a basic surface for pack - panel support and feed, labelled 101 and fitted with means which facilitate sliding 102; the above-mentioned pusher beam 100 which, with grippers 103, moves the panel in the direction A. The panel is pushed towards a cutting line located downstream and transversally mobile, that is to say according to the direction labelled B.

Returning to the solution disclosed, a device 8 for supporting and guiding two blade carriages 9 and 10 is fixed to the base 3, under the table 4.

The two carriages 9 and 10 are located under the table 4 and are attached to the base 3 by the above-mentioned device 8 so that they slide, along the device 8 and driven by a drive part 11, in a direction B parallel with the table 4 and perpendicular to the direction A and the surface illustrated in Figure 1.

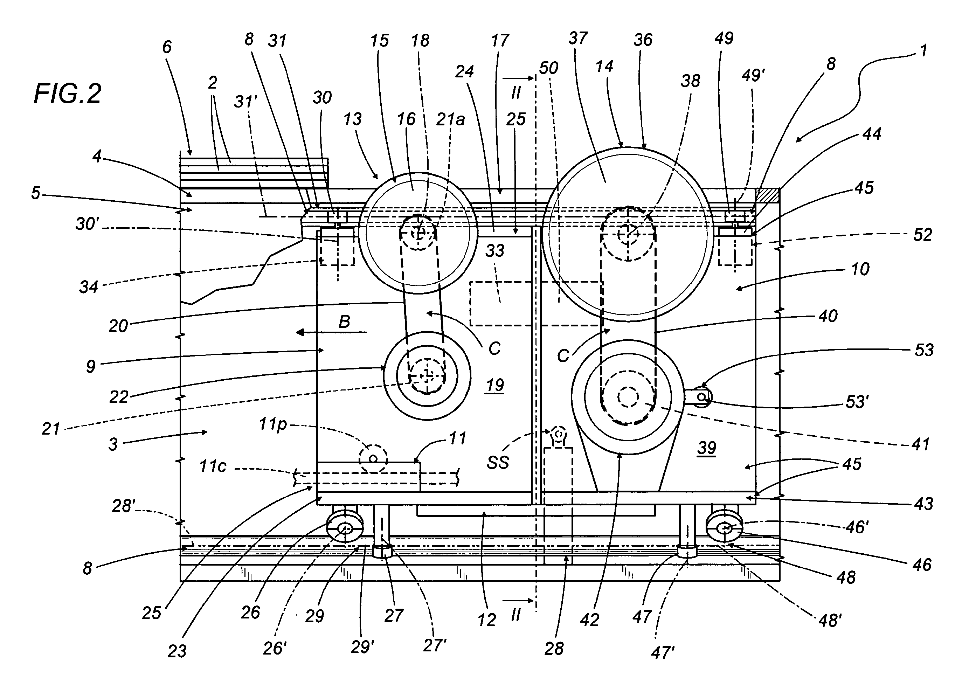

Specifically, as illustrated in Figure 2, the carriage 9 is located upstream of the carriage 10 with reference to the direction of motion of the carriages 9 and 10. It is driven directly by the part 11 connected to it and tows the carriage 10 behind it, connected by an elastically deformable leaf spring shaped connecting element 12.

The drive part 11 is of the known type and therefore schematically illustrated with a block in Figure 2.

For example, but without limiting the scope of the invention, the drive part 11 may consist of a rack 11c fixed to the base 3 and a motor-powered pinion 11p, integral with the carriage 9, and attached to the rack, as illustrated with a dashed line in Figure 2. Alternatively, there may be a chain or toothed belt drive device.

The carriage 9 supports a panel 2 scoring unit 13, whilst the carriage 10 supports an actual panel 2 cutting unit 14. The function of the scoring unit 13, widely known, is to precisely define the cutting line that will be followed by the cutting unit 14, to prevent splintering on the edge of the panels 2 where the unit 14 makes contact.

The scoring unit 13 substantially consists of a circular saw 15, comprising a scoring blade 16 projecting through a slot 17 (see Figure 1) in the table 4 and able to rotate about an axis 18 parallel with the direction A.

The saw or blade 15 is supported cantilever style by a vertical wall 19 of the carriage 9 and is driven by a belt 20, wound around a first, motor 22 output pulley 21 and a second, return pulley 21a coaxial with the blade 16. The motor 22 is also supported cantilever style by the wall 19 and is located underneath and on the same side as the saw 15.

The bottom of the wall 19 of the carriage 9 is fixed at a right angle to a horizontal wall 23 extending on the opposite side of the base 3, and the top of the wall is fixed at a right angle to a horizontal wall 24 towards the base 3. The walls 19, 23 and 24 form a carriage 9 frame 25, in which the vertical dimension of the wall 19 is greater than the horizontal dimension of the walls 23 and 24.

Specifically, the frame 25, in cross-section or seen according to a plane orthogonal to direction B, has a Z shape very extended in the vertical direction.

The bottom of the wall 23 supports two pairs of wheels 26 and 27, which turn about respective angled axes 26' and 27' and roll, with their cylindrical outer surfaces, on a lower rail 28 forming part of the above-mentioned supporting and guiding device 8. The rail 28 is formed by an extended cylindrical bar, whose central axis 28' extends along the base 3 parallel with the direction B.

The wheels 26 engage with the top and side of the rail 28 and discharge the entire weight of the carriage 9 and its load onto the rail, whilst the wheels 27 engage with the bottom and side of the rail 28. In practice, the rail 28 is held between the wheels 26 and 27 with which it forms a cylindrical hinge 29 whose axis 29' coincides with the axis 28' of the rail 28.

The top of the wall 24 supports two wheels 30 which turn about respective vertical axes 30' and roll, with their cylindrical external surfaces, on an upper guide rail 31 which is also part of the supporting and guiding device 8. The rail 31 consists of an extended substantially cylindrical bar whose central axis 31' extends along the base 3 parallel with the axis 28'. In particular, the bar forming the rail 31 preferably has two opposite vertical flat areas on its surface to provide improved support for the wheels 30 (see Figure 6 in more detail). Alternatively, in an alternative embodiment not illustrated, the rail 31 may consist of an extended parallelepiped bar, with two horizontal faces and two vertical faces, the latter having the same function as the above-mentioned flat areas.

In both cases, the wheels 30 engage with the side of the rail 31 with a play that, as described below, may be precisely adjusted to allow the carriage 9 to oscillate with a predetermined amplitude about the axis 29' of the hinge 29.

The carriage 9 is fitted with an active vibrating device 33, designed to transmit to the carriage 9, and therefore to the blade 16, a vibrating motion in the direction A.

The vibration in the direction A is constrained by the play with which the wheels 30 engage with the side of the rail 31. The play may be adjusted, from zero to a maximum value of around several tenths, using an adjusting device 34 only schematically illustrated in Figures 2 and 6. In practice, the adjusting device may affect one or both of the wheels 30 to set the desired level of play which will be defined by the centre to centre distance between them, labelled 30i in Figure 6.

The vibrating device 33 is also schematically illustrated in Figure 2 and, for example, may comprise, in the known way, rotary parts with eccentric masses at variable speeds.

Similarly, the cutting unit 14 substantially consists of a circular saw 36, comprising a cutting blade 37 which projects through the slot 17 in the table 4 coplanar with the blade 16 and rotates about an axis 38 parallel with the direction A. The saw 36 is supported cantilever style by a vertical wall 39 of the carriage 10 and is driven by a belt 40, wound around a first, motor 42 output pulley 41 and a second, return pulley 41a coaxial with the blade 37. The motor 42 is also supported cantilever style by the wall 39 and is located underneath and on the same side as the saw 36.

The bottom of the wall 39 of the carriage 10 is fixed at a right angle to a horizontal wall 43 extending on the opposite side of the base 3, and the top is fixed at a right angle to a horizontal wall 44 towards the base 3. The walls 39, 43 and 44 form a carriage 10 frame 45, in which the vertical dimension of the wall 39 is greater than the horizontal dimension of the walls 43 and 44.

Specifically, as illustrated in Figure 1, the frame 45, in cross-section or seen according to a plane orthogonal to direction B, has a Z shape very extended in the vertical direction.

The bottom of the wall 43 supports two pairs of wheels 46 and 47, which turn about respective angled axes 46' and 47' and roll, with their cylindrical outer surfaces, on the above-mentioned rail 28.

The wheels 46 engage with the top and side of the rail 28 and discharge the entire weight of the carriage 10 and its load onto the rail, whilst the wheels 47 engage with the bottom and side of the rail 28. In practice, the rail 28 is held between the wheels 46 and 47 with which it forms a cylindrical hinge 48 whose axis 48' coincides with the axis 28' of the rail 28.

The top of the wall 44 supports two wheels 49, which turn about respective vertical axes 49' and roll, with their cylindrical outer surfaces, on the above-mentioned rail 31.

The wheels 49 engage with the side of the rail 31 with a play that, as already described relative to the carriage 9, may be precisely adjusted to allow the carriage 10 a blade 37 vibrating oscillation with predetermined amplitude about the axis 48' of the hinge 48 (again see Figure 6).

The carriage 10 is fitted with an active vibrating device 50, designed to transmit to the carriage 10, and therefore to the blade 37, a vibrating motion in the direction A. The vibration in the direction A is constrained by the play with which the wheels 49 engage with the side of the rail 31. The play may be adjusted, from zero to a maximum value of around several tenths, using an adjusting device 52 similar to that previously described and schematically illustrated in Figures 1 and 6.

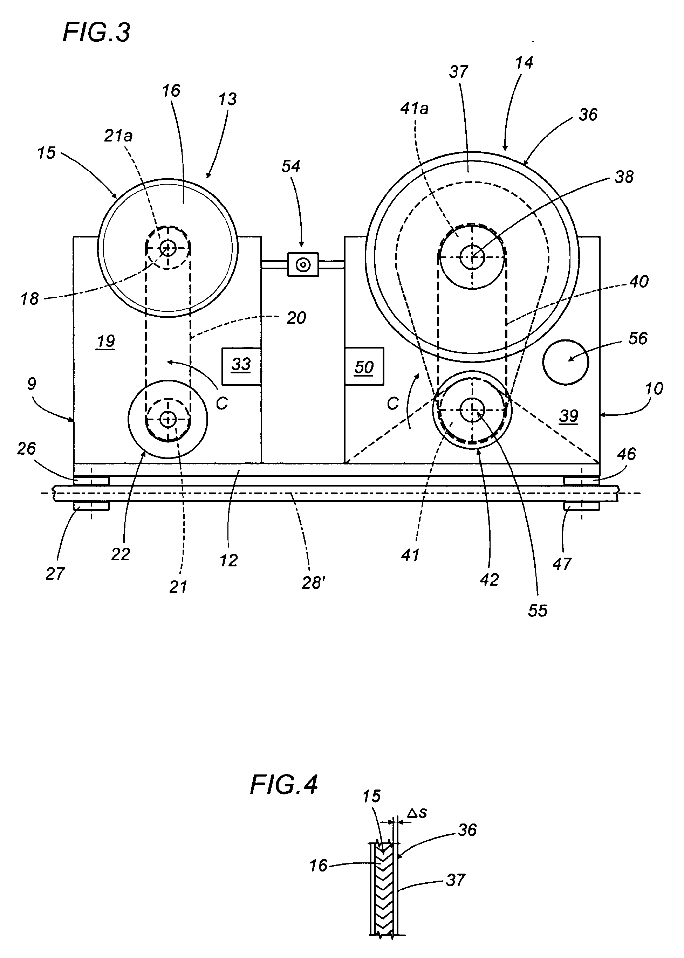

The vibrating device 50 is also schematically illustrated in Figures 2 and 3 and, for example, may comprise, in the known way, rotary parts with eccentric masses at variable speeds.

The vibrating motion of the blade 37 in direction A is in addition to a percussion motion in direction B, automatically created by the reaction of the panels 2 on the blade 37. The percussion motion is self-regulating, in the sense that the harder the panels 2 are, or the greater their resistance to cutting, then the greater the blade 37 percussion stroke will be in direction B.

A similar situation applies for the scoring blade 16.

It should be noticed that the percussion of the blade 37 in particular (and of the scoring saw 16) is allowed by the elastic construction of the assembly consisting of the two carriages 9 and 10, since they are connected to one another by the leaf spring element 12. Therefore, they form a relatively elastic structure and the blade 37 percussion can be obtained because the carriage 10, after leaf spring 12 inflections, can oscillate in the direction labelled C relative to the carriage 9, when the carriages 9 and 10 are fed in the above-mentioned direction B. A similar effect can apply to the scoring saw with relative rotary motion between the carriage 9 and the carriage 10. Once again, it should be noticed that this percussion effect is allowed by the elasticity of the system consisting of the carriages 9, 10 and the lower leaf spring 12.

In contrast, carriage 10 vibration in direction A is substantially independent of carriage 9 vibration in the same direction A, being caused by the above-mentioned eccentric masses.

In the alternative embodiment schematically illustrated in Figure 3, the carriages 9 and 10 are connected to one another at the top by a kinematic device 54 designed to allow adjustment of the amplitude of carriage 10 percussion (that is to say its oscillation relative to the carriage 9) allowed by the elasticity of the leaf spring 12. In other words, the percussion value may be left freely to the elasticity of the carriage 9 and 10 supporting system, but if necessary it can be adjusted, to a value close to zero, using the device 54 which may consist of a normal play regulator with a ball connection schematically illustrated as a simple block in Figure 3.

To better understand the idea behind the system,

Figure 3 illustrates with a dashed line how the cutting unit 14 can be mounted in such a way that it oscillates on a horizontal pin 55 extending cantilever style from the carriage 10 in direction A, instead of with the elastic effect given by the leaf spring system previously introduced. The pin 55 allows the blade 37 at least one degree of freedom in direction C. In this way, following oscillation of the entire unit 14 about the pin 55, with a predetermined maximum stroke, the blade 37 performs a percussion motion in direction C as well as being fed in direction B.

Said percussion may be free, or self-generating as described following the cutting reaction, or, as illustrated in Figure 3, it may be transmitted or added to by a device 56 (preferably a vibrator with eccentric masses) similar to the devices 33 and 50 but acting in directions B and C.

Unlike what is illustrated in Figures 1 and 2, in the alternative embodiment in Figure 3 the rail 28 consists of an extended prismatic bar and the wheels 26, 27, 46 and 47 (here substituted by sliding bushings labelled with the same numbers) engage with the rail, allowing the carriages 9 and 10 to move only in direction B.

In other words, the cylindrical hinges 29 and 48 are absent and the vibration in direction A is allowed not by the oscillation of the carriages 9 and 10 about the axis 28', but by the elastic deformability of the carriages 9 and 10, or of predetermined portions of them preferably located close to the respective units 13 and 14, in direction A.

The overall load on the carriages 9, 10 or on the assembly consisting of the load on the carriages and their weight are balanced by a counterweight 53 so that the result of the weight force acting on the hinge 29 is coplanar, as well as orthogonal, to the axis 29', thus producing a moment that is substantially null about said axis.

The balancing counterweight 53 is supported by a rod 53' fixed, for example as a preferred embodiment but without limiting the scope of the invention, to the side wall of the motor 42 and may slide along the rod in direction A as required by the operator. This may create a slight imbalance in the weights in such a way that during normal machining the blade 37 continues to keep the carriage 10 unbalanced in the required direction: for example to the right D in Figure 1. As soon as the blade 37 starts to wear, its teeth "reject" the material of which the panels 2 are made and said material gives an unbalancing reaction in the opposite direction D1, that is to say, to the left.

A sensor (only schematically illustrated as a switch or a proximity device SS again in Figure 1) is suitably positioned to detect the carriage 10 imbalance in the above-mentioned opposite direction and, in this way, signals that the blade 37 is worn. Obviously, the acceptable wear limit for the blade 37 may be adjusted by the operator by simply controlling the initial imbalance of the weight 53. The same applies for carriage 9.

As illustrated in Figure 4, the unit 13 scoring blade 16 illustrated in Figure 2 or 3 or 4, is slightly thinner than the blade 37. However, this architecture (that is to say, the relative thickness of the scoring saw 16 and the main blade 37) allows the scoring saw to perform its scoring with a cut whose width is equivalent (or slightly greater) than the width (nominal thickness) of the cutting blade 37. This is because the scoring saw can perform said vibration in direction A and so is always able to overcome the •s (see Figure 4), that is to say, the difference in the thickness of the two blades 16 and 37. This feature is extremely important, since the scoring saw can be kept in place (that is to say, without substituting it) eliminating - as in the prior art - the need to dismantle and adapt the scoring saw to the thickness of the blade. It should be noticed that during normal use of the cutting system described, the scoring tool is changed once every N times that the actual cutting tool is changed, therefore, the system's capacity for self-regulation described is a huge benefit in terms of machine productivity and final costs for panel machining.
It should be noticed that, in the alternative embodiments described above, cutting blade 37 vibration in direction A prevents gouging when the back of the blade meets the edges of the panel cut again, labelled T in Figure 5.

It should also be noticed that the various vibrating devices, active or passive, can be selectively activated to operate independently of one another and simultaneously with the drive part 11.

The invention described is suitable for evident industrial applications and may be subject to modifications and variations without thereby departing from the scope of the inventive concept. Moreover, all details of the invention may be substituted by technically equivalent elements.

## Claims

1. A panel saw machine (1) comprising a base (3), at least one blade carriage (9, 10) mobile relative to the base (3) for cutting panels (2), supporting and guiding means (8) for the carriage (9, 10) fixed to the base (3), and drive means (11) attached to the carriage (9, 10) for moving the carriage (9, 10) in a first direction (B) along the supporting and guiding means (8); the carriage (9, 10) supporting a unit (15, 36) which supports and drives a blade (16, 37); the machine (1) being **characterised in that** it comprises vibrating means attached to the carriage (9, 10) to allow and/or transmit to the carriage (9, 10) and/or the blade (16, 37) a vibrating motion at least during the carriage (9, 10) movement in the first direction (B).

2. The machine according to claim 1, **characterised in that** the vibrating means allow the blade (16, 37) at least one degree of freedom in the first direction (B); said degree of freedom allowing the blade (16, 37) to perform a vibrating or percussion motion in the first direction (B), created at least by the reaction of the panels (2) on the blade (16, 37).

3. The machine according to claim 1, **characterised in that** the vibrating means are designed to transmit to the blade (16, 37) a vibrating or percussion motion at least in the first direction (B).

4. The machine according to any of the claims from 1 to 3, **characterised in that** the vibrating means are designed to transmit to the carriage (9, 10) a vibrating motion at least in a second direction (A) transversal to the first direction (B).

5. The machine according to claim 4, **characterised in that** the vibrating means can be activated selectively to transmit to the carriage (9, 10) and/or to the blade (16, 37) a vibrating motion in the first and/or section direction (B, A).

6. The machine according to any of the claims from 1 to 5, **characterised in that** the supporting and guiding means (8) comprise a first rail (28) for supporting and guiding the carriage (9, 10); the first rail (28) consisting of an extended cylindrical bar having a central axis (28') extending in the first direction (B); the carriage (9, 10) being attached to the first rail (28) in such a way that it can slide in the first direction (B) and turn about the central axis (28').

7. The machine according to claim 6, comprising balancing means (53) for keeping the carriage (9, 10) substantially balanced above the first rail (28).

8. The machine according to any of the claims from 1 to 5, **characterised in that** the supporting and guiding means (8) comprise a first rail (28) for supporting and guiding the carriage (9, 10); the first rail (28) consisting of an extended prismatic bar having a central axis (28') extending in the first direction (B); the carriage (9, 10) being attached to the first rail (28) in such a way that it can slide in the first direction (B) and is elastically deformable at least in a second direction (A) transversal to the first direction (B).

9. The machine according to either of the claims 6, 7, **characterised in that** the supporting and guiding means (8) comprise a second rail (31) for guiding the carriage (9, 10); the second rail (31) consisting of an extended bar having a central axis (31') extending in the first direction (B); the carriage (9, 10) being attached to the second rail (31) in such a way that it can slide in the first direction (B) and with a play which can be adjusted transversally to the first direction (B).

10. The machine according to claim 9, comprising adjusting means (34, 52) for precision adjustment of the play.

11. The machine according to claim 10, comprising means for adjusting an initial carriage (9, 10) imbalance relative to a vertical plane and to the first rail (28).

12. The machine according to claim 11, **characterised in that** the means for adjusting carriage (9, 10) imbalance comprise a counterweight (53) mobile and adjustable along a second direction (A) transversal to the first direction (B).

13. The machine according to any of the claims from 1 to 12, comprising two carriages (9, 10) connected one behind the other.

14. The machine according to claim 13, **characterised in that** the carriages (9, 10) are connected to one another by a leaf spring (12) which is elastically deformable, allowing the carriages (9, 10) to move towards and away from one another in a direction C.

15. The machine according to claim 13, **characterised in that** at least one of the carriages (9, 10) is mounted in such a way that it oscillates on a horizontal pin (55) extending cantilever style from the relative carriage in direction (A), so that the carriages (9, 10) move towards and away from one another in a direction C.

16. The machine according to claim 13, 14 or 15, **characterised in that** a first carriage (9) carries a blade (16) for scoring the panels (2), and a second carriage (10), behind the first carriage (9), carries a blade (37) for actually cutting the panels (2).

17. The machine according to claim 11 or 12,
**characterised in that** there is a sensor (SS) for detecting the imbalance at least of the carriage (10) in the direction opposite to that of its initial imbalance, in this way signalling wear on the blade (37).
